# FASCICULE DE BREVET EUROPEEN

(11) **EP 1 652 346 B1**
(45) Date de publication et mention de la délivrance du brevet: **12.08.2009**
(21) Numéro de dépôt: 04767680.4
(22) Date de dépôt: 15.07.2004
(51) Int. Cl.: H04L 12/28, H04L 12/56

(54) **PROCEDE DE LOCALISATION D'OBJETS MOBILES COMMUNICANTS AU SEIN D'UN RESEAU DE COMMUNICATIONS**
VERFAHREN ZUM FINDEN VON MOBILEN KOMMUNIZIERENDEN OBJEKTEN IN EINEM KOMMUNIKATIONSNETZ
METHOD OF LOCATING MOBILE COMMUNICATING OBJECTS WITHIN A COMMUNICATIONS NETWORK

(30) Priorité: 23.07.2003 FR 0308990
(43) Date de publication de la demande: 03.05.2006
(73) Titulaire: INRIA INSTITUT NATIONAL DE RECHERCHE EN INFORMATIQUE ET EN AUTOMATIQUE, Rocquencourt F-78153 Le Chesnay (FR); UNIVERSITE DE NICE SOPHIA-ANTIPOLIS, 06103 Nice Cédex 02 (FR)
(72) Inventeur: Attali, Isabelle, F-06600 Antibes (FR); Caromel, Denis, F-06600 Antibes (FR); HUET Fabrice,, F-06560 Valbonne (FR)
(74) Mandataire: Plaçais, Jean Yves
(86) Numéro de dépôt international: PCT/FR2004/001853
(87) Numéro de publication internationale: WO 2005/020506

(56) Documents cités:
- WO-A-01/69869
- WO-A-97/02680
- OBJECTSPACE, INC.: "ObjectSpace Voyager Core Package; Technical Overview; Version 1.0" décembre 1997 (1997-12), pages 1-40,

## Description

L'invention concerne le domaine des réseaux de communications et plus particulièrement la localisation d'objets mobiles communicants au sein de tels réseaux.

On entend ici par "objet" tout ce qui est capable d'échanger des données, et notamment les terminaux de communication tels que les téléphones mobiles, les ordinateurs portables, et les assistants numériques personnels (ou APN), mais également les calculs en cours d'exécution, les applications mobiles, les ressources logiques ou physiques, voire même les utilisateurs.

Dans les réseaux de communications, de nombreux objets mobiles se déplacent fréquemment de domaine en domaine (ou de site en site), changeant ainsi d'adresse, ou de nom, ou encore d'espace de nommage. Deux méthodes sont couramment utilisées pour joindre ou localiser de tels objets mobiles.

La première méthode consiste à utiliser un serveur de localisation maintenant à jour une table de localisation dans laquelle sont stockées les dernières références de localisation connues (ou identifiants de localisation) d'objets mobiles. Ainsi, lorsqu'un premier objet mobile, dit "source", souhaite communiquer avec un second objet mobile, dit "agent", qui s'est déplacé, il interroge tout d'abord le serveur de localisation afin qu'il lui transmette la dernière référence de localisation connue de cet agent. Puis, la source tente de joindre cet agent au niveau de la référence de localisation reçue. Si la référence est encore valide, alors la communication peut s'effectuer. Dans le cas contraire (l'agent ayant migré), la source doit de nouveau interroger le serveur de localisation, en espérant que l'agent lui a récemment communiqué sa nouvelle référence de localisation, puis tenter de nouveau de joindre l'agent.

Avec une telle méthode, plusieurs tentatives peuvent être nécessaires à la source pour réussir à joindre l'agent. En outre, lorsque l'agent se déplace rapidement au sein d'un espace geographique important, il n'est généralement pas garanti que la communication puisse se faire entre la source et l'agent.

La seconde méthode consiste à mettre en oeuvre un mécanisme permettant à une source de transmettre un message à un agent sans disposer de sa référence de localisation explicite ou d'une référence intermédiaire. Cette méthode est plus connue sous le nom de "routage". Il s'agit en fait d'utiliser l'infrastructure, logicielle et matérielle, sous jacente du réseau pour transporter un message jusqu'à sa destination.

Chaque fois qu'un agent (également appelé objet) s'apprête à quitter un site (ou domaine), il génère un objet spécifique appelé "répéteur" (ou "forwarder") qu'il laisse au niveau dudit site. On entend ici par "site" une entité physique ou logique capable d'accueillir des objets mobiles, tels qu'un ordinateur portable, un téléphone mobile ou un APN connecté à un réseau WiFi, GSM/GPRS ou UMTS, une machine virtuelle java, une cellule GSM et analogues. Il se constitue ainsi, entre une source et un agent, une chaîne de répéteurs définissant un chemin virtuel qu'empruntent les messages délivrés par la source et destinés à l'agent.

Avec cette méthode, lorsque l'un des répéteurs d'une chaîne est défaillant, ou disparaît, ce qui est relativement fréquent, la source se trouve dans l'impossibilité de joindre ou de localiser l'agent concerné.

Le document WO 01/69869 décrit un procédé et un appareil pour les routages de paquets dans un réseau sans fil ad hoc, utilisant notamment un en-tête particulier et des tables de routage dans chaque noeud pour faciliter une propagation de proche en proche.

Le document "Objet Space Voyager Core Package Technical Overview; Version 1.0''; Objet Space; inc.; December 1997; pages 1 à 38 decrit une plateforme de développement de systèmes distribués en Java sur la base d'applications existantes.

Aucune de ces méthodes n'étant entièrement satisfaisante, l'invention a donc pour but d'améliorer la situation.

Elle propose à cet effet un procédé dédié à la localisation d'objets mobiles communicants selon la revendication 1.

Le procédé selon l'invention peut comporter d'autres caractéristiques qui pourront être prises séparément ou en combinaison, et notamment :
- on peut associer au second objet un premier compteur de migration, puis incrémenter d'une unité la valeur de ce premier compteur lors de la création de chaque nouveau répéteur au niveau d'un site, et ensuite comparer la valeur à un seuil choisi afin qu'en cas de dépassement du seuil le second objet adresse au serveur son propre identifiant de localisation pour qu'il soit stocké en correspondance de son identifiant primaire, le premier compteur étant ensuite réinitialisé,
- on peut associer au second objet un compteur temporel afin qu'à l'expiration d'une durée choisie il adresse au serveur son propre identifiant de localisation pour qu'il soit stocké dans le serveur en correspondance de son identifiant primaire, le compteur temporel étant ensuite initialisé de sorte qu'un nouveau comptage débute. Dans ce cas, on peut déclencher le comptage du compteur temporel, après l'avoir initialisé, lorsque le résultat de la comparaison indique que la valeur du premier compteur est inférieure au seuil,
- on peut initialiser le premier compteur après chaque transmission au serveur de l'identifiant de localisation du second objet,
- on peut arrêter le comptage du compteur temporel du second objet chaque fois que ce dernier migre vers un autre site,
- le répéteur cesse préférentiellement son activité de relai après avoir adressé son identifiant de localisation. Dans ce cas, lorsque le répéteur a cessé son activité de relai et s'il n'appartient pas à une autre chaîne, il est avantageux de procéder à sa suppression afin qu'il ne consomme plus de ressources,
- on peut associer à chaque répéteur un identifiant de position représentatif de sa position au sein de la chaîne. Dans ce cas, à l' expiration de la durée choisie le répéteur peut adresser au serveur l'identifiant de localisation du répéteur ou site suivant ainsi que son propre identifiant de position afin qu'ils soient stockés en correspondance de l'identifiant primaire du second objet. Il est également avantageux de stocker dans le serveur, en correspondance de l'identifiant du second objet, l'identifiant de position du répéteur émetteur et l' identifiant de localisation du répéteur ou site suivant lorsque l'identifiant de position présente une valeur supérieure à celle stockée,
- on peut associer au second objet un second compteur de position dont la valeur est incrémentée d'une unité lors de chacune de ses migrations inter-sites et qui définit un identifiant de position représentatif de sa position au sein de la chaîne. Dans ce cas, lorsque la valeur du premier compteur dépasse le seuil choisi, il est particulièrement avantageux que le second objet adresse au serveur son propre identifiant de localisation et l'identifiant de position représentatif de la valeur de son second compteur afin qu'ils soient stockés dans le serveur en correspondance de l'identifiant primaire du second objet. On stocke alors dans le serveur, en correspondance de l'identifiant primaire du second objet, son identifiant de position et son identifiant de localisation si ce dernier présente une valeur supérieure à celle stockée,
- l'identifiant déposition d'un répéteur d'un site est préférentiellement représentatif de la valeur du second compteur du second objet au moment ou ce dernier quitte le site.

L'invention concerne en outre un réseau de communications, selon la revendication 14.

Le réseau de communications selon l'invention peut comporter d'autres caractéristiques qui pourront être prises séparément ou en combinaison, et notamment :
- un premier compteur de migration. Dans ce cas, les moyens de traitement sont agencés, chaque fois qu'ils génèrent un nouveau répéteur dans un site, pour incrémenter d'une unité la valeur du premier compteur, puis pour comparer la valeur à un seuil choisi, puis, en cas de dépassement du seuil, pour adresser au serveur l'identifiant de localisation de l'objet mobile dans lequel ils sont implantés afin qu'il le stocke en correspondance de son identifiant primaire, et enfin pour initialiser le premier compteur,
- un compteur temporel. Dans ce cas, les moyens de traitement sont agencés, chaque fois qu'expire une durée choisie, pour adresser au serveur l'identifiant de localisation de l'objet mobile dans lequel ils sont implantés afin qu'il le stocke en correspondance de son identifiant primaire, puis pour initialiser le compteur temporel de sorte qu'un nouveau comptage débute. Il est par ailleurs particulièrement avantageux que les moyens de traitement soient agencés de manière à déclencher le comptage du compteur temporel, après l'avoir initialisé, chaque fois que le résultat de la comparaison indique que la valeur du premier compteur est inférieure au seuil,
- les moyens de traitement peuvent être chargés d'initialiser le premier compteur après chaque transmission au serveur de l'identifiant de localisation de leur objet mobile, consécutivement à une comparaison portant sur le temps passé sur le site,
- les moyens de traitement peuvent être chargés d'arrêter le comptage du compteur temporel lorsque leur mobile migre d'un site vers un autre site,
- les moyens de traitement peuvent être chargés de configurer chaque répéteur, au moment de sa génération, de sorte qu'il cesse son activité après avoir adressé au serveur son identifiant de localisation,
- les moyens de traitement peuvent être chargés d'associer à chaque répéteur, au moment de sa génération, un identifiant de position représentatif de sa position au sein de la chaîne, afin qu'à l'expiration de la durée choisie le répéteur adresse au serveur l'identifiant de localisation du répéteur ou site suivant et son propre identifiant de position pour qu'ils soient stockés dans le serveur en correspondance de l'identifiant primaire de l'objet mobile,
- un second compteur de migration dont la valeur définit un identifiant de position représentatif de la position de l'objet mobile au sein de la chaîne. Dans ce cas, les moyens de traitement sont préférentiellement chargés d'incrémenter d'une unité la valeur du second compteur lors de chaque migration de l'objet mobile, et de transmettre au serveur, en cas de dépassement du seuil choisi par le premier compteur, les identifiants de localisation et de position de l'objet mobile dans lequel ils sont implantés afin qu'il les stocke en correspondance de l'identifiant primaire de l'objet mobile. Par ailleurs, il est particulièrement avantageux que les moyens de traitement soient agencés, lorsque l'objet mobile dans lequel ils sont implantés quitte un site; pour communiquer au répéteur du site la valeur du second compteur afin qu'elle constitue l'identifiant de position du répéteur.

D'autres caractéristiques et avantages de l'invention apparaîtront à l'examen de la description détaillée ci-après, et des dessins annexés, sur lesquels :
- la figure 1 illustre de façon schématique, sous la forme de blocs fonctionnels, une partie d'un réseau de communications mettant en oeuvre un procédé de localisation selon l'invention, dans le cadre d'un premier exemple d'interruption d'une chaîne de répéteurs,
- la figure 2 illustre de façon schématique, sous la forme de blocs fonctionnels, une partie d'un réseau de communications mettant en oeuvre un procédé de localisation selon l'invention, dans le cadre d'un second exemple d'interruption d'une chaîne de répéteurs,
- la figure 3 illustre de façon schématique un exemple d'algorithme de fonctionnement d'un répéteur selon l'invention, et
- la figure 4 illustre de façon schématique un exemple d'algorithme de fonctionnement d'un objet mobile de type "agent", selon l'invention.

Les dessins annexés pourront non seulement servir à compléter l'invention, mais aussi contribuer à sa définition, le cas échéant.

L'invention concerne d'une manière générale la localisation d'objets mobiles communicants au sein de réseaux.

Comme indiqué dans la partie introductive, l'invention concerne tout type d'objet mobile communicant, c'est-à-dire capable d'échanger des données, comme par exemple les terminaux de communication tels que les téléphones mobiles, les ordinateurs portables, les assistants numériques personnels (ou APN) et les entités logiques de calcul pouvant se déplacer de site en site, mais également les calculs en cours d'exécution, les applications mobiles, les ressources logiques ou physiques, voire même les utilisateurs.

Dans la description qui suit, on considère, à titre d'exemple illustratif, que les objets mobiles communicants sont des terminaux mobiles, de type téléphone mobile, appartenant, par exemple, à un réseau de communications de type WAN (ou "Wide Area Network"). Bien entendu, l'invention n'est pas limitée à ce type de réseau. Elle s'applique notamment, également, aux réseaux dits locaux de type LAN (ou "Local Area Network") et aux réseaux métropolitains de type MAN (ou "Metropolitan Area Network").

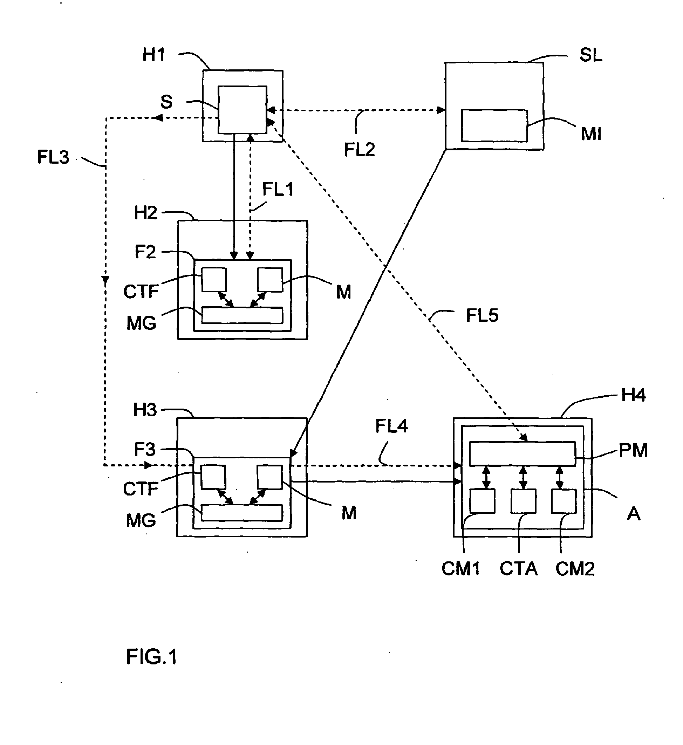

Comme cela est illustré sur la figure 1, un réseau de communications de type WAN comporte, de façon très schématique, une multiplicité de matériels de communication (ou "host") Hi (ici i =1 à 4) capables d'échanger entre eux des données (ou messages), grâce à l'infrastructure logicielle et matérielle du réseau, et définissant chacun un site (Hi) associé à un identifiant de localisation, comme par exemple une adresse de communication (de type internet ou téléphonique), ou un nom, ou encore un espace de nommage.

Par exemple, les sites H1 à H4 sont des ordinateurs fixes raccordés par voie filaire au réseau WAN, disposant d'une adresse internet, qui définit leur identifiant de localisation, et/ou éventuellement équipés d'une interface permettant le raccordement d'un téléphone mobile associé à un identifiant primaire, tel qu'un numéro de téléphone.

L'exemple de portion de réseau, illustré sur la figure 1, correspond à une situation dans laquelle un objet communicant S, éventuellement mobile, ci-après appelé "source", est implanté dans le (ou raccordé au) site H1 et a quelques instants auparavant établi une communication avec un objet mobile communicant A, ci-après appelé "agent", qui était alors raccordé au site H2 et qui s'est depuis déplacé vers le site H3, puis le site H4.

En d'autres termes, cette situation correspond à un agent A (ici un téléphone mobile) qui a été successivement raccordé à trois sites H2, H3 et H4, disposant de trois identifiants (ou références) de localisation différents.

L'agent (ou objet mobile communicant) A comporte un module de traitement PM. Celui-ci est chargé, lorsque que son agent A a établi une communication avec une source S, de manière à générer en chaque site Hi par lequel il passe (c'est-à-dire auquel l'agent A est momentanément "raccordé"), un répéteur (ou "forwarder") Fi.

Un répéteur Fi est un objet spécifique généré par un agent A, généralement au moment où il s'apprête à quitter un site Hi, afin qu'il relaie vers le répéteur suivant F(i+1) ou vers le site suivant H(i+1) chaque message provenant de la source S et qui lui est destiné. Ainsi, au fur et à mesure des déplacements (ou migrations) de l'agent A une chaîne de répéteurs Fi se constitue, laquelle définit un chemin virtuel entre la source S et ledit agent A, permettant la communication de proche en proche des messages de localisation provenant de la source S.

Pour permettre à un répéteur Fi de le joindre dans le site suivant H(i+l), l'agent A lui communique, lorsqu'il le crée, l'identifiant de localisation dudit site et l'identifiant primaire de l'agent. Cet identifiant de localisation est alors stocké dans une mémoire M.

La technique utilisée pour générer un répéteur est parfaitement connue de l'homme de l'art. Par conséquent, elle ne sera pas décrite ici. On peut par exemple en trouver une description dans le document "Voyager" de la société ObjectSpace, Inc, accessible à l'adresse internet http://www.objectspace.com.

Selon l'invention, le module de traitement PM de l'agent A est également agencé pour configurer chaque répéteur Fi qu'il génère de manière à ce qu'il puisse transmettre à au moins un serveur de localisation SL du réseau, à l'expiration d'une durée choisie, l'identifiant de localisation du répéteur suivant F(i+1), stocké dans la mémoire M, afin que ce serveur SL le stocke en correspondance de l'identifiant primaire de l'agent A.

Le serveur de localisation SL comporte à cet effet une mémoire MI dans laquelle se trouve stockée une table de correspondance entre au moins les identifiants primaires d'agents A du réseau et les identifiants de localisation (ou références de localisation) qui représentent par exemple les dernières adresses connues des sites Hi qui hébergent lesdits agents A.

Ainsi, lorsqu'une source S souhaite joindre ou localiser un agent A avec lequel elle avait établi une communication lorsqu'il était hébergé par un site du réseau, par exemple H2, elle commence par tenter de joindre le site H2, qui représente la dernière adresse connue de l'agent A, en lui adressant un message. Puis, si l'agent A s'est déplacé deux situations doivent être envisagées selon qu'il existe ou non une chaîne continue de répéteurs Fi liant le répéteur F2 du site H2 au site Hn (par exemple H4) qui héberge l'agent A (ou qui est sur le point de l'héberger).

Dans la première situation, le message provenant de la source S parvient au niveau du répéteur F2 généré dans le site H2 par l'agent A lorsqu'il l'a quitté. Le répéteur F2 extrait alors de sa mémoire M l'identifiant de localisation du site suivant H3, dans lequel l'agent a généré le répéteur F3, et lui transmet le message reçu. Le répéteur F3 fait de même. Il extrait de sa mémoire M l'identifiant de localisation du site suivant H4 et lui transmet le message reçu. Ledit message peut alors être transmis à l'agent A, lequel peut éventuellement y répondre en joignant directement la source S dont il connaît l'identifiant de localisation depuis le début. Il est cependant préférable, lorsqu'un message parvient à l'agent A par le biais de la chaîne de répéteurs, que le module de traitement PM de l'agent A commence par transmettre à la source S l'identifiant de localisation du site Fi qui l'héberge.

Dans la seconde situation, le message provenant de la source S parvient au niveau du répéteur F2 généré dans le site H2 par l'agent A lorsqu'il l'a quitté. Par exemple, comme illustré sur la figure 1, la chaîne de répéteurs Fi est interrompue entre les sites H2 et H3. Le répéteur F2 ne pouvant transmettre le message de la source S au répéteur suivant H3, il adresse à la source S un message lui signalant cette impossibilité (flèche FL1). Sur la figure 1, les flèches en trait continu matérialisent la connaissance d'un identifiant de localisation, tandis que les flèches en pointillés matérialisent une communication.

La source S établit alors une communication avec le serveur de localisation SL (flèche FL2) afin de déterminer auprès de lui le dernier identifiant de localisation connu de l'agent A. Dans l'exemple illustré sur la figure 1, l'identifiant de localisation qui est stocké dans la mémoire MI du serveur SL, en correspondance de l'identifiant primaire de l'agent A, est celui du site H3 (et donc du répéteur F3). Le serveur SL communique alors à la source S l'identifiant de localisation du site H3. Puis, la source établit une communication avec le site H3 (flèche FL3) afin de lui transmettre le message destiné à l'agent A. A réception du message, le répéteur F3 extrait de sa mémoire M l'identifiant de localisation du site suivant H4 (qui héberge ici l'agent A) et lui transmet le message reçu (flèche FL4). Ledit message peut alors être transmis à l'agent A, lequel peut alors éventuellement y répondre enjoignant directement la source S dont il connaît l'identifiant de localisation depuis le début (flèche FL5). Il est cependant préférable, lorsqu'un message parvient à l'agent A par le biais d'au moins un répéteur Fi, que le module de traitement PM de l'agent A commence par transmettre à la source S l'identifiant de localisation du site Fi qui l'héberge et son identifiant primaire.

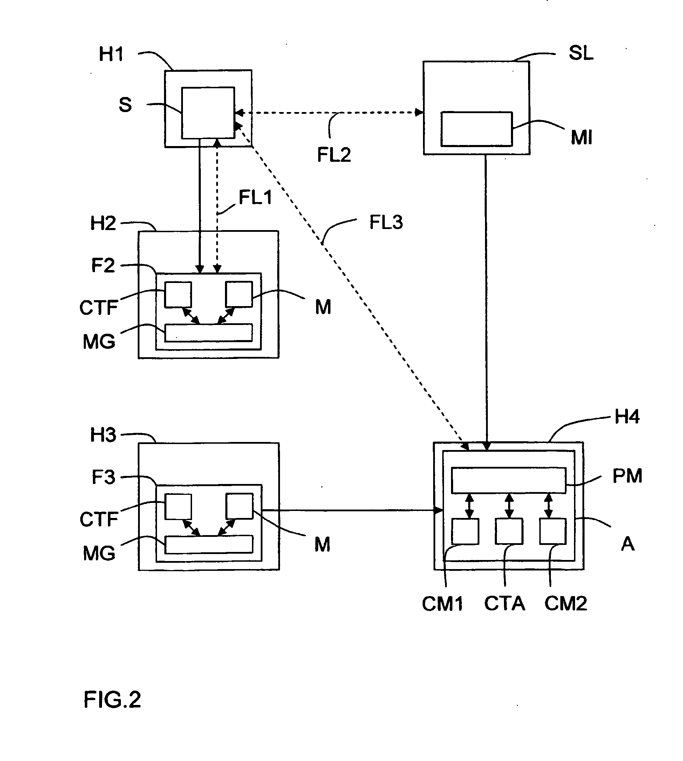

Sur la figure 2 se trouve illustrée une variante de la situation illustrée sur la figure 1. Ici, la chaîne de répéteurs Fi est également interrompue entre les sites H2 et H3, mais l'identifiant de localisation qui est stocké dans la mémoire MI du serveur SL, en correspondance de l'identifiant primaire de l'agent A, est celui du site H4. Le répéteur F2 ne pouvant transmettre le message de la source S au répéteur suivant H3, il adresse à la source S un message lui signalant cette impossibilité (flèche FL1).

La source S établit alors une communication avec le serveur de localisation SL (flèche FL2) afin de déterminer auprès de lui le dernier identifiant de localisation connu de l'agent A. Le serveur SL communique alors à la source S l'identifiant de localisation du site H4. Puis, la source S établit une communication avec le site H4 (flèche FL3) et donc avec l'agent A afin de lui transmettre le message, auquel il peut éventuellement répondre.

Grâce à l'invention, en utilisant à la fois un serveur de localisation SL et des répéteurs Fi, la localisation d'un agent est donc notablement facilitée. Mais, afin d'éviter que les répéteurs Fi consomment inutilement des ressources du réseau pour maintenir leurs liens, l'invention propose, comme évoqué ci-avant, un mécanisme de cessation d'activité.

Plus précisément, chaque répéteur Fi généré par un agent A dispose en complément de la mémoire M, dans laquelle se trouve stocké l'identifiant de localisation du site suivant H(i+1), d'un compteur temporel CTF, qui est activé au moment de sa génération dans le site Hi, et d'un module de gestion MG.

Le compteur temporel CTF est agencé pour adresser un signal au module de gestion MG lorsqu'une durée choisie est écoulée. Cette durée est par exemple de l'ordre de quelques millisecondes à quelques secondes, selon la nature du réseau et de l'application. Lorsque le module de gestion MG reçoit ce signal, il extrait de la mémoire M l'identifiant de localisation du site suivant H(i+1) et le transmet au(x) serveur(s) de localisation SL du réseau. A réception de cet identifiant de localisation, le serveur de localisation SL le stocke dans sa mémoire MI en correspondance de l'identifiant primaire de l'agent concerné A. L'identifiant de localisation reçu remplace en fait l'ancien identifiant de localisation, précédemment stocké. Puis, le module de gestion MG du répéteur Fi supprime les connexions entrante et sortante qui le lient aux autres répéteurs (ou sites) de sa chaîne, ce qui met fin aux activités du répéteur Fi liées à cette chaîne.

Il est important de noter que le répéteur peut demeurer actif dans une ou plusieurs autres chaînes si il leur appartient.

Si le répéteur Fi du site Hi n'appartient qu'à une unique chaîne de répéteurs, il peut, une fois qu'il a cessé ses activités, être supprimé par ce que l'homme de l'art appelle un "ramasse-miettes". Dans le cas contraire, il ne pourra être supprimé par le ramasse-miettes qu'une fois qu'il aura cessé toutes ses activités.

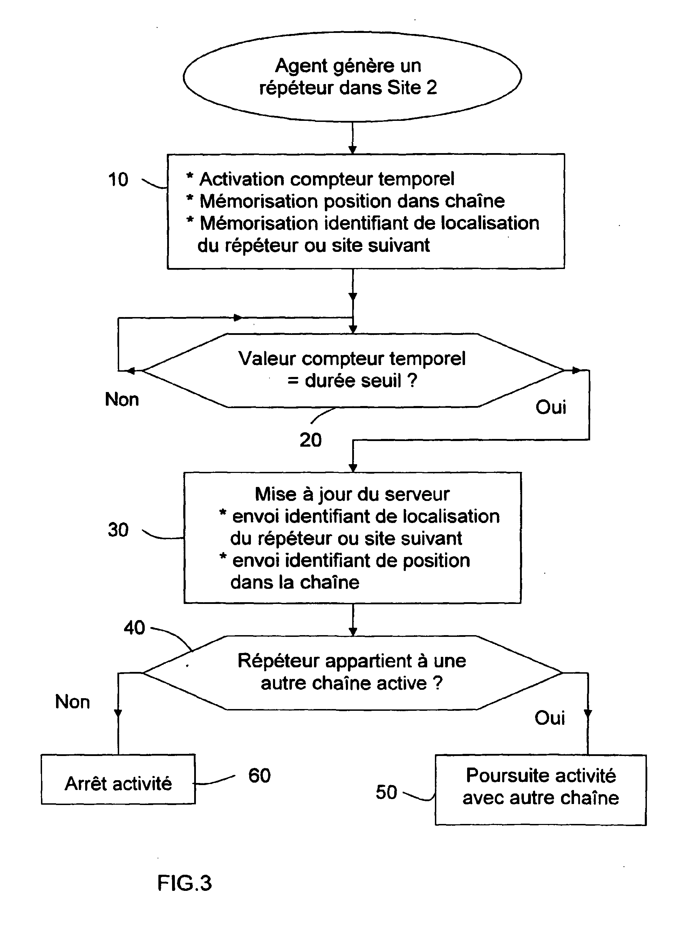

Pour éviter qu'un identifiant de localisation correspondant à un site H(i+n) soit remplacé par un identifiant de localisation correspondant à un site Hi placé en amont dans sa chaîne, ce qui peut survenir lorsque l'agent se déplace (ou migre) très rapidement et à déjà fait parvenir au serveur de localisation SL, comme on le verra plus loin, l'identifiant de localisation du site H(i+n) qui l'héberge (ou qui l'a récemment hébergé), l'agent A attribue à chaque répéteur Fi, au moment de sa génération, un identifiant de position représentatif de sa position dans la chaîne de répéteurs. Le fonctionnement du répéteur Fi est alors légèrement modifié par rapport à celui décrit ci-avant. Ce fonctionnement est illustré sous la forme d'un algorithme sur la figure 3.

Lorsque l'agent décide de migrer d'un site, par exemple H2, vers un autre site, par exemple H3, son module de traitement PM génère dans une étape 10 le répéteur F2 en le configurant, d'une part, avec un compteur temporel CTF calé sur une durée choisie, et d'autre part, avec une mémoire M contenant l'identifiant de localisation du site H3 (et bien entendu l'identifiant de localisation du ou des serveurs de localisation SL et l'identifiant primaire de l'agent A) ainsi que son identifiant de position. Le compteur temporel CTF est activé au moment de la génération du répéteur Fi.

Puis, dans une étape 20, le compteur temporel CTF vérifie régulièrement si sa valeur temporelle en cours est supérieure à la durée choisie. Si ce n'est pas le cas, le compteur CTF poursuit son comptage et ses vérifications. En revanche, lorsque la valeur temporelle en cours devient égale à la durée choisie, le compteur CTF adresse un signal au module de gestion MG.

Dans une étape 30, le module de gestion MG extrait de la mémoire M l'identifiant de localisation du site suivant H(i+1), l'identifiant de localisation du serveur de localisation SL, l'identifiant primaire de l'agent A et l'identifiant de position du site Hi, et les transmet au serveur de localisation SL du réseau.

Puis, dans une étape 40, le module de gestion MG vérifie si le répéteur Fi appartient à une autre chaîne active. Si tel est le cas (étape 50), il ne supprime que les connexions entrante et sortante qui le lient aux autres répéteurs (ou sites) de la chaîne qu'il veut quitter, permettant ainsi au répéteur Fi de poursuivre ses activités avec les autres chaînes auxquelles il appartient. Dans le cas contraire (étape 60), le module de gestion MG supprime les connexions entrante et sortante qui le lient aux autres répéteurs (ou sites) de sa chaîne, ce qui met fin aux activités du répéteur Fi, lequel peut alors être supprimé par le ramasse-miettes.

Dans cette variante, la mémoire MI du serveur de localisation SL stocke également un identifiant de position en correspondance des identifiant primaire et identifiant de localisation. Par conséquent, lorsque le serveur de localisation SL reçoit les différents identifiants de localisation et l'identifiant de position d'un répéteur Fi, il peut immédiatement confronter l'identifiant de position reçu à l'identifiant de position stocké dans sa mémoire MI en correspondance de l'identifiant primaire concerné.

Si l'identifiant de position reçu correspond à une valeur de position inférieure à celle qui correspond à l'identifiant de position stocké, alors la mémoire MI n'est pas mise à jour. Dans le cas contraire, le serveur SL met à jour sa mémoire MI en remplaçant les anciens identifiant de position et identifiant de localisation par ceux reçus.

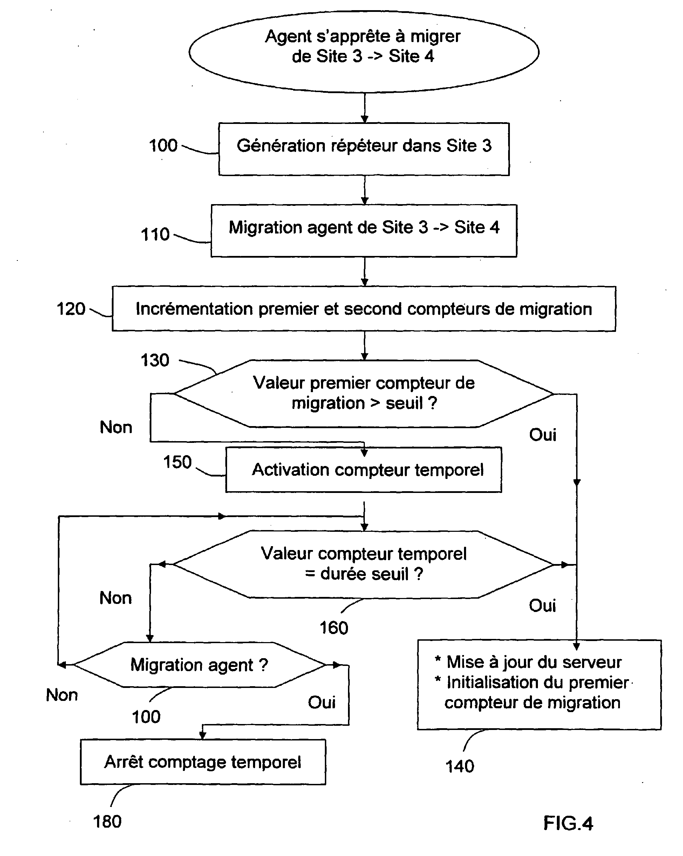

Afin de faciliter encore plus la localisation d'un agent A, l'invention propose un mécanisme supplémentaire, optionnel, décrit ci-après en référence à la figure 4.

Il s'agit en fait d'un mécanisme de mise à jour du serveur de localisation SL par l'agent A.

Pour mettre en oeuvre ce mécanisme, chaque agent A est équipé au moins d'un premier compteur de migration CM1 dont la valeur en cours indique le nombre de migrations effectuées par l'agent A depuis sa dernière initialisation.

Le module de traitement PM est par ailleurs agencé, chaque fois qu'il génère un nouveau répéteur Fi dans un site Hi, de manière à incrémenter d'une unité la valeur du premier compteur de migration CM1, puis à comparer cette nouvelle valeur à un seuil choisi, puis, en cas de dépassement du seuil, à adresser au serveur de localisation SL l'identifiant de localisation du site dans lequel son agent A est implanté (bien entendu accompagné de son identifiant primaire) afin qu'il le stocke en correspondance de son identifiant primaire. Le module de traitement PM peut ensuite initialiser le premier compteur CM1 afin qu'un nouveau comptage puisse être débuté lors de la migration suivante.

L'agent A peut également comporter un compteur temporel CTA chargé de compter le temps qu'il passe sur un même site Hi. Dans ce cas, le module de traitement PM est agencé pour surveiller la valeur en cours du compteur temporel CTA de sorte que chaque fois qu'elle est égale à une durée choisie, il adresse au serveur de localisation SL l'identifiant de localisation du site dans lequel il est implanté (bien entendu accompagné de l'identifiant primaire de l'agent A) afin qu'il le stocke en correspondance de son identifiant primaire. Le module de traitement PM peut ensuite initialiser le compteur temporel CTA de sorte qu'un nouveau comptage débute.

Préférentiellement, le module de traitement PM est agencé de manière à déclencher le comptage du compteur temporel CTA, bien entendu après l'avoir initialisé, après avoir effectué la comparaison de la valeur du premier compteur de migration CM 1 au seuil choisi, et plus précisément, chaque fois que le résultat de la comparaison indique que la valeur du premier compteur de migration CM1 est inférieure au seuil choisi.

Mais, bien entendu, on peut envisager un fonctionnement en parallèle (ou décorrélé) de la mise à jour du serveur de localisation SL par le biais de la comparaison portant sur le nombre de migration et par le biais de la comparaison portant sur le temps passé sur un site Hi.

Egalement de préférence, le module de traitement PM est agencé de manière à initialiser le premier compteur de migration CM 1 après chaque transmission au serveur de localisation SL de l'identifiant de localisation de son agent A, consécutivement à une comparaison portant sur le temps passé sur le site Hi.

En outre, le module de traitement PM peut être agencé de manière à arrêter le comptage du compteur temporel CTA lorsque son agent A migre vers un autre site H(i+1).

Enfin, l'agent A peut également comporter un second compteur de migration CM2 dont la valeur définit un identifiant de position représentatif de sa position au sein de la chaîne de répéteurs Fi. Le module de traitement PM est alors chargé d'incrémenter d'une unité la valeur du second compteur de migration CM2 chaque fois que son agent A migre.

Par ailleurs, dans ce cas le module de traitement PM transmet au serveur de localisation SL les identifiants de localisation et de position lorsque la valeur du premier compteur de migration CM 1 est supérieure au seuil choisi. De la sorte, le serveur de localisation peut effectuer sa comparaison de position et décider de la mise à jour de sa mémoire MI lorsque la position reçue est supérieure à celle stockée.

La valeur que présente le second compteur de migration CM2 au moment où un agent A s'apprête à quitter un site Hi sert avantageusement d'identifiant de position au répéteur Fi généré.

Un exemple d'algorithme de fonctionnement complet de l'agent A est illustré sur la figure 4.

Lorsqu'un agent A s'apprête à migrer d'un site, par exemple H3, vers un autre site, par exemple H4, son module de traitement PM génère un répéteur F3 dans une étape 100.

Une fois le répéteur F3 généré, l'agent A migre vers le site H4 (étape 110). Une fois parvenu dans ce site H4, le module de traitement PM incrémente les premier CM1 et second CM2 compteurs de migration de son agent A (étape 120). Puis, dans une étape 130, le module de traitement PM compare la valeur en cours du premier compteur de migration CM 1 à un seuil choisi.

Si la valeur est supérieure au seuil, alors dans une étape 140 le module de traitement PM déclenche la procédure de mise à jour du serveur, en lui transmettant l'identifiant de localisation du site H4, son propre identifiant primaire et son identifiant de position (qui est donné par la valeur de son second compteur de migration CM2), puis il initialise le premier compteur de migration CM 1.

En revanche, si la valeur est inférieure ou égale au seuil, alors dans une étape 150 le module de gestion PM active son compteur temporel CTA afin qu'il débute son comptage temporel. Puis, dans une étape 160 le module de gestion PM compare régulièrement la valeur de son compteur temporel CTA à une durée choisie. Si cette valeur devient égale à la durée choisie, le module de gestion PM active son compteur temporel CTA et passe à l'étape 140 de mise à jour du serveur de localisation SL et d'initialisation du premier compteur de migration CM1. En revanche, si la valeur est inférieure à la durée choisie, le module de traitement PM vérifie si l'agent A est en cours de migration. Si ce n'est pas le cas, le module de traitement PM retourne à l'étape de comparaison 160. En revanche, si tel est le cas, le module de traitement PM interrompt le comptage du compteur temporel CTA (étape 180).

Le module de traitement PM, les compteurs de migration CM1 et CM2 et le compteur temporel CTA de l'agent A peuvent être réalisés sous la forme de circuits électroniques, de modules logiciels (ou informatiques), ou d'une combinaison de modules logiciels et de circuits électroniques. Par ailleurs, les répéteurs Fi sont préférentiellement réalisés sous la forme de modules logiciels (ou informatiques).

L'invention ne se limite pas aux modes de réalisation d'objet mobile communicant et procédé de localisation décrits ci-avant, seulement à titre d'exemple, mais elle englobe toutes les variantes que pourra envisager l'homme de l'art dans le cadre des revendications ci-après.

Ainsi, dans ce qui précède on a décrit des réseaux de communications ne comportant qu'un seul serveur de localisation. Mais, dans certaines conditions il peut être avantageux d'en utiliser plusieurs.

Par ailleurs, dans ce qui précède on a décrit des situations dans lesquelles la source était un objet communicant fixe. Mais, l'invention s'applique également aux situations dans lesquelles la source et l'agent sont tous les deux des objets mobiles communicants. Dans ce cas, la source présente un agencement sensiblement identique à celui de l'agent.

En outre, dans ce qui précède on a décrit une application dans laquelle les agents étaient des téléphones mobiles. Mais, l'invention n'est pas limitée à cette application. Elle concerne en effet, notamment, les agents de calcul dans les infrastructures dites "Global Computing" ou de type "Grid", les agents de calcul dédiés à l'interrogation de bases de données réparties, les utilisateurs au sein des réseaux WiFi, et les utilisateurs dans les réseaux GSM/GPRS ou UMTS.

## Revendications

1. Procédé de localisation d'objets mobiles communicants dans un réseau de communications, dans lequel, en cas d'établissement d'une communication entre de premier (S) et second (A) objets communicants, dont le second (A) au moins est mobile, on génère, en des sites (Hi) par lesquels passe ledit second objet (A), des répéteurs (Fi) communicant de proche en proche au sein d'une chaîne qu'ils constituent ensemble de manière à relayer vers ledit second objet (A) chaque message provenant dudit premier objet (S), **caractérisé en ce qu'**il consiste en outre :
* à stocker dans chaque répéteur (Fi) un identifiant représentatif de la localisation du répéteur (F (i+1)) ou site (H (i+1)) suivant au sein de ladite chaîne,
* à associer un compteur temporel (CTF) à chaque répéteur (Fi), au moment de sa génération, de sorte qu'à l'expiration d'une durée choisie il adresse à au moins un serveur de localisation (SL) dudit réseau ledit identifiant de localisation du répéteur (F (i+1)) ou site (H (i+1)) suivant afin qu'il soit stocké dans ledit serveur (SL) en correspondance d'un identifiant primaire du second objet (A),
et **en ce que**, en cas d'interruption de la chaîne, les répéteurs (Fi) sont propres à solliciter ledit premier objet (S) pour récupérer ledit identifiant de localisation du répéteur (F (i+1)) ou site (H (i+1)) correspondant audit identifiant primaire du second objet (A) dans ledit serveur (SL).

2. Procédé selon la revendication 1, **caractérisé en ce que** l'on associe audit second objet (A) un premier compteur de migration (CM1), puis on incrémente d'une unité la valeur dudit premier compteur (CM21) lors de la création de chaque nouveau répéteur (Fi) en un site (Hi), et on compare ladite valeur à un seuil choisi de sorte qu'en cas de dépassement dudit seuil ledit second objet (A) adresse audit serveur (SL) son propre identifiant de localisation afin qu'il soit stocké en correspondance de son identifiant primaire, ledit premier compteur (CM1) étant alors réinitialisé.

3. Procédé selon l'une des revendications 1 et 2, **caractérisé en ce que** l'on associe audit second objet (A) un compteur temporel (CTA) de sorte qu'à l'expiration d'une durée choisie il adresse audit serveur (SL) son propre identifiant de localisation afin qu'il soit stocké dans ledit serveur en correspondance de son identifiant primaire, ledit compteur temporel (CTA) étant alors initialisé de sorte qu'un nouveau comptage commence.

4. Procédé selon la combinaison des revendications 2 et 3, **caractérisé en ce que** l'on déclenche le comptage dudit compteur temporel (CTA), après l'avoir initialisé, lorsque le résultat de la comparaison indique que la valeur dudit premier compteur (CM1) est inférieure audit seuil.

5. Procédé selon l'une des revendications 2 à 4, **caractérisé en ce que** l'on initialise ledit premier compteur (CM1) après chaque transmission au serveur (SL) de l'identifiant de localisation dudit second objet (A), consécutivement à une comparaison portant sur le temps passé sur un site (Hi).

6. Procédé selon l'une des revendications 3 à 5, **caractérisé en ce que** l'on arrte le comptage du compteur temporel (CTA) du second objet (A) lorsqu'il migre d'un site (Hi) vers un autre site (H (i+1)).

7. Procédé selon l'une des revendications 1 à 6, **caractérisé en ce qu'**après avoir adressé son identifiant de localisation ledit répéteur (Fi) cesse son activité de relai.

8. Procédé selon la revendication 7, **caractérisé en ce qu'**une fois que ledit répéteur (Fi) a cessé son activité de relai et s'il n'appartient pas à une autre chaîne, on procède à sa suppression.

9. Procédé selon l'une des revendications 1 à 8, **caractérisé en ce que** l'on associe à chaque répéteur (Fi) un identifiant de position représentatif de sa position au sein de ladite chaîne, et **en ce qu'**à l'expiration de la durée choisie le répéteur (Fi) adresse audit serveur (SL) ledit identifiant de localisation du répéteur suivant (F (i+1)) et son propre identifiant de position de sorte qu'ils soient stockés dans ledit serveur (SL) en correspondance de l'identifiant primaire du second objet (A).

10. Procédé selon la revendication 9, **caractérisé en ce que** l'on stocke dans ledit serveur (SL), en correspondance de l'identifiant du second objet (A), l'identifiant de position du répéteur émetteur (Fi) et l'identifiant de localisation du répéteur (F (i+1)) ou site (H (i+1)) suivant lorsque ledit identifiant de position présente une valeur supérieure à celle stockée.

11. Procédé selon l'une des revendications 2 à 10, **caractérisé en ce que** l'on associe audit second objet (A) un second compteur de migration (CM2) dont la valeur est incrémentée d'une unité lors de chaque migration et définit un identifiant de position représentatif de sa position au sein de ladite chaîne, et **en ce qu'**en cas de dépassement dudit seuil choisi par ledit premier compteur de migration (CM 1) ledit second objet (A) adresse audit serveur (SL) son propre identifiant de localisation et l'identifiant de position représentatif de la valeur de son second compteur de migration (CM2) de sorte qu'ils soient stockés dans ledit serveur (SL) en correspondance dudit identifiant primaire du second objet (A).

12. Procédé selon la revendication 11, **caractérisé en ce que** l'on stocke dans ledit serveur (SL), en correspondance de l'identifiant primaire du second objet (A), l'identifiant de position dudit second objet (A) et son identifiant de localisation, lorsque ledit identifiant de position présente une valeur supérieure à celle stockée.

13. Procédé selon l'une des revendications 9 et 10 en combinaison avec l'une des revendications 11 et 12, **caractérisé en ce que** ledit identifiant de position d'un répéteur (Fi) d'un site (Hi) est représentatif de la valeur du second compteur de migration (CM2) du second objet (A) au moment ou ce dernier quitte ledit site (Hi).

14. Réseau de communications, comprenant des objets mobiles communicants, un serveur de localisation, et des moyens de traitement (PM) propres, en cas d'établissement d'une communication entre des premier (S) et second (A) objets communicants, dont le second (A) au moins est mobile, à générer en des sites (Hi) par lesquels le second objet (A) passe, des répéteurs (Fi) communicant de proche en proche au sein d'une chaîne qu'ils constituent ensemble de manière à relayer chaque message provenant dudit premier objet (S) vers ledit second objet (A), **caractérisé en ce que** lesdits moyens de traitement (PM) sont agencés pour associer à chaque répéteur (Fi), au moment de sa génération, un compteur temporel (CTF) et pour configurer ledit répéteur (Fi) de sorte, d'une part, qu'il puisse stocker un identifiant représentatif de la localisation du répéteur (F (i+1)) ou site (H (1+1)) suivant au sein de ladite chaîne, et d'autre part, qu'il transmette audit serveur de localisation (SL) dudit réseau, à l'expiration d'une durée choisie, ledit identifiant de localisation du répéteur (F (i+1)) ou site (H (i+1)) suivant afin qu'il le stocke en correspondance d'un identifiant primaire du second objet (A), lesdits répéteurs (Fi) étant propres, en cas d'interruption de ladite chaîne, à solliciter ledit premier objet (S) pour récupérer ledit identifiant de localisation du répéteur (F (i+1)) ou site (H (i+1)) correspondant audit identifiant primaire du second objet (A) dans ledit serveur (SL).

15. Réseau de communications selon la revendication 14, **caractérisé en ce qu'**il comprend un premier compteur de migration (CM1), et **en ce que** lesdits moyens de traitement (PM) sont agencés, chaque fois qu'ils génèrent un nouveau répéteur (Fi) en un site (Hi), pour incrémenter d'une unité la valeur dudit premier compteur (CM 1), puis pour comparer ladite valeur à un seuil choisi, puis, en cas de dépassement dudit seuil, pour adresser audit serveur (SL) l'identifiant de localisation de leur objet mobile (A) afin qu'il le stocke en correspondance de son identifiant primaire, et pour initialiser ledit premier compteur (CM1).

16. Réseau de communications selon l'une des revendications 14 et 15, **caractérisé en ce qu'**il comprend un compteur temporel (CTA), et **en ce que** lesdits moyens de traitement (PM) sont agencés, à l'expiration d'une durée choisie, pour adresser audit serveur (SL) l'identifiant de localisation de leur objet mobile (A) afin qu'il le stocke en correspondance de son identifiant primaire, puis pour initialiser ledit compteur temporel (CTA) de sorte qu'un nouveau comptage commence.

17. Réseau de communications selon la combinaison des revendications 15 et 16, **caractérisé en ce que** lesdits moyens de traitement (PM) sont agencés pour déclencher le comptage dudit compteur temporel (CTA), après l'avoir initialisé, chaque fois que le résultat de la comparaison indique que la valeur dudit premier compteur de migration (CM1) est inférieure audit seuil.

18. Réseau de communications selon l'une des revendications 15 à 17, **caractérisé en ce que** lesdits moyens de traitement (PM) sont agencés pour initialiser ledit premier compteur de migration (CM1) après chaque transmission au serveur (SL) de l'identifiant de localisation de leur objet mobile (A), consécutivement à une comparaison portant sur le temps passé sur un site (Hi).

19. Réseau de communications selon l'une des revendications 16 à 18, **caractérisé en ce que** lesdits moyens de traitement (PM) sont agencés pour arrêter le comptage dudit compteur temporel (CTA) lorsque leur objet mobile (A) migre d'un site (Hi) vers un autre site (H (i+1)).

20. Réseau de communications selon l'une des revendications 14 à 19, **caractérisé en ce que** lesdits moyens de traitement (PM) sont agencés pour configurer chaque répéteur (Fi), au moment de sa génération, de sorte qu'il cesse son activité après avoir adressé audit serveur (SL) son identifiant de localisation.

21. Réseau de communications selon l'une des revendications 14 à 20, **caractérisé en ce que** lesdits moyens de traitement (PM) sont agencés pour associer à chaque répéteur (Fi), au moment de sa génération, un identifiant de position représentatif de sa position au sein de ladite chaîne, de sorte qu'à l'expiration de la durée choisie ledit répéteur (Fi) adresse audit serveur (SL) ledit identifiant de localisation du répéteur (F (i+1)) ou site (H (i+1)) suivant et son propre identifiant de position pour qu'ils soient stockés dans ledit serveur (SL) en correspondance de l'identifiant primaire de l'objet mobile (A).

22. Réseau de communications selon l'une des revendications 15 à 21, **caractérisé en ce qu'**il comprend un second compteur de migration (CM2) dont la valeur définit un identifiant de position représentatif de la position dudit objet mobile (A) au sein de ladite chaîne, et **en ce que** lesdits moyens de traitement (PM) sont agencés pour incrémenter d'une unité la valeur dudit second compteur de migration (CM2) lors de chaque migration dudit objet mobile (A), et pour transmettre audit serveur (SL), en cas de dépassement dudit seuil choisi par ledit premier compteur de migration (CM1), les identifiants de localisation et de position de leur objet mobile (A) de sorte qu'il les stocke en correspondance de l'identifiant primaire de l'objet mobile (A).

23. Réseau de communications selon la combinaison des revendications 21 et 22, **caractérisé en ce que** lesdits moyens de traitement (PM) sont agencés, lorsque leur objet mobile (A) quitte un site (Hi), pour communiquer audit répéteur (Fi) du site (Hi) la valeur du second compteur de migration (CM2) de sorte qu'elle constitue ledit identifiant de position dudit répéteur (Fi).

24. Réseau de communications selon l'une des revendications 14 à 23, **caractérisé en ce qu'**il constitue un terminal mobile choisi dans un groupe comprenant au moins les téléphones mobiles, les ordinateurs portables, les assistants numériques personnels et les entités logiques de calcul pouvant se déplacer de site en site.

## Claims

1. Method of locating communicating mobile objects in a communications network, in which, in the case of a communication being established between first (S) and second (A) communicating objects, the second of which (A) at least is mobile, in sites (Hi) through which the second object (A) is passing, repeaters (Fi) are generated communicating from one to the next within a chain which they form together, so as to relay to the second object (A) each message coming from the first object (S), **characterised in that** it further consists in:
* storing in each repeater (Fi) an identifier representing the location of the next repeater (F(i+1)) or site (H(i+1)) within the chain,
* allocating a timer (CTF) to each repeater (Fi) at the moment when this is generated, so that upon expiry of a selected duration, it addresses to at least one location server (SL) of the network the said location identifier of the next repeater (F(i+1)) or site (H(i+1)) in order for it to be stored in the server (SL) in relation to a primary identifier of the second object (A),
and **in that**, in the case the chain is interrupted, the repeaters (Fi) are capable of soliciting the first object (S) to recover said identifier of the next repeater (F(i+1)) or site (H(i+1)) corresponding to said primary identifier of the second object (A) in said server (SL).

2. Method according to claim 1, **characterised in that** a first migration counter (CM1) is allocated to the second object (A), then the value of the primary counter (CM1) is incremented by one unit upon the creation of each new repeater (Fi) in a site (Hi), and the value is compared to a selected threshold so that if this value exceeds the threshold, the second object (A) addresses to the server (SL) its own location identifier in order for it to be stored on relation to its primary identifier, the first counter (CM1) being then reinitialised.

3. Method according to either of claims 1 or 2, **characterised in that** a timer (CTA) is allocated to the second object (A) so that upon expiry of a selected duration, it addresses its own location identifier to the server (SL) in order for it to be stored in the server in relation to its primary identifier, the timer (CTA) being then initialised so that a new count starts.

4. Method according to a combination of claims 2 and 3, **characterised in that** the counting of the timer (CTA) is triggered after the timer has been initialised, when the result of the comparison indicates that the value of the first counter (CM1) is lower than the threshold.

5. Method according to one of claims 2 to 4, **characterised in that** the first counter (CM1) is initialised after each transmission to the server (SL) of the location identifier of the second object (A), consequent upon a comparison relating to the time spent on a site (Hi).

6. Method according to one of claims 3 to 5, **characterised in that** the counting of the timer (CTA) of the second object (A) is stopped when it migrates from one site (Hi) to another (H(i+1)).

7. Method according to one of claims 1 to 6, **characterised in that** the repeater (Fi) ceases its relay activity after addressing its locating identifier.

8. Method according to claim 7, **characterised in that** once the repeater (Fi) has ceased its relay activity and if it does not belong to another chain, it is removed.

9. Method according to one of claims 1 to 8, **characterised in that** each repeater (Fi) is allocated a position identifier representing its position within the chain, and **in that** upon expiry of the selected duration the repeater (Fi) addresses to the server (SL) the location identifier of the next repeater (F(i+1)) and its own position identifier so that these are stored in the server (SL) in relation to the primary identifier of the second object (A).

10. Method according to claim 9, **characterised in that** the position identifier of the transmitting repeater (Fi) and the location identifier of the next repeater (F(i+1)) or site (H(i+1)) are stored in the server (SL), in relation to the identifier of the second object (A), when the position identifier has a value higher than that stored.

11. Method according to one of claims 2 to 10, **characterised in that** there is allocated to the second object (A) a second migration counter (CM2) whose value is incremented by one unit upon each migration and defines a position identifier representing its position within the chain, and **in that** if the selected threshold is exceeded by the first migration counter (CM1), the second object (A) addresses to the server (SL) its own location identifier and the position identifier representing the value of its second migration counter (CM2) so that these are stored in the server (SL) in relation to the primary identifier of the second object (A).

12. Method according to claim 11, **characterised in that** the position identifier of the second object (A) and its location identifier are stored in the server (SL), in relation to the primary identifier of the second object (A), when the position identifier has a value higher than that stored.

13. Method according to either of claims 9 or 10 in combination with either of claims 11 or 12, **characterised in that** the position identifier of a repeater (Fi) of a site (Hi) is representative of the value of the second migration counter (CM2) of the second object (A) at the moment when this leaves the site (Hi).

14. Communications network, comprising communicating mobile objects, a location server (SL), and processing means (PM) capable, if a communication is set up between a first (S) and a second (A) communication object, of which at least the second (A) object is mobile, of generating in sites (Hi) through which the second (A) object passes, repeaters (Fi) communicating from one to the next within a chain which they form together so as to relay each message coming from said first object (S) to said second object (A), **characterised in that** the processing means (PM) are arranged to associate a timer (CTF) to each repeater (Fi), at the moment when this is generated, and to configure the repeater (Fi) so that, on the one hand, it can store an identifier representing the location of the next repeater (F(i+1)) or site (H(i+1)) within the chain, and on the other hand, so that it transmits to said location server (SL) of the network, upon expiry of a selected duration, the location identifier of the next repeater (F(i+1)) or site (H(i+1)) within the chain, so that it stores these in relation to a primary identifier of the second object (A), said repeaters (Fi) being capable, in the case said chain is interrupted, to solicit said first object (S) to recover location of the next repeater (F(i+1)) or site (H(i+1)) in relation to said primary identifier of the second object (A) in said server (SL).

15. Communications network according to claim 14, **characterised in that** it comprises a first migration counter (CM1), and **in that** the processing means (PM) are arranged, each time they generate a new repeater (Fi) in a site (Hi), to increment by one unit the value of the first counter (CM1), then to compare the value to a selected threshold, then, if the threshold is exceeded, to address to the server (SL) the location identifier of their mobile object (A) in order for it to store these in relation to its primary identifier, and to initialise the first counter (CM1).

16. Communications network according to either of claims 14 or 15, **characterised in that** it comprises a timer (CTA), and **in that** the processing means (PM) are arranged, upon expiry of a selected duration, to address to the server (SL) the location identifier of their mobile object (A) in order for it to store the same in relation to its primary identifier, then to initialise the timer (CTA) so that a new count starts.

17. Communications network according to a combination of claims 15 and 16, **characterised in that** the processing means (PM) are arranged to trigger the counting of the timer (CTA) after initialising the same, each time the result of the comparison indicates that the value of the first migration counter (CM1) is lower than the threshold.

18. Communications network according one of claims 15 to 17, **characterised in that** the processing means (PM) are arranged to initialise the first migration counter (CM1) after each transmission to the server (SL) of the location identifier of their mobile object (A) consequent upon a comparison relating to the time spent on a site (Hi).

19. Communications network according to one of claims 16 to 18, **characterised in that** the processing means (PM) are arranged to stop counting of the timer (CTA) when their mobile object (A) migrates from one site (Hi) to another (H(i+1)).

20. Communications network according to one of claims 14 to 19, **characterised in that** the processing means (PM) are arranged to configure each repeater (Fi), at the moment when it is generated, so that it ceases its activity after addressing its location identifier to the server (SL).

21. Communications network according to one of claims 14 to 20, **characterised in that** the processing means (PM) are arranged to associate a position identifier with each repeater (Fi), at the moment when it is generated, representing its position within the chain, so that upon expiry of the selected duration, the repeater (Fi) addresses to the server (SL) the location identifier of the next repeater (F(i+1)) or site (H(i+1)) and its own position identifier in order that these are stored in the server (SL) in relation to the primary identifier of the mobile object (A).

22. Communications network according to one of claims 15 to 21, **characterised in that** it comprises a second migration counter (CM2) whose value defines a position identifier representing the position of the mobile object (A) within the chain, and **in that** the processing means (PM) are arranged to increment by one unit the value of the second migration counter (CM2) upon each migration of the mobile object (A) and to transmit to the server (SL), if the selected threshold is exceeded by the first migration counter (CM1), the location and position identifiers of their mobile object (A) so that it stores these in relation to the primary identifier of the mobile object (A).

23. Communications network according to a combination of claims 21 and 22, **characterised in that** the processing means (PM) are arranged to communicate the value of the second migration counter (CM2) to the repeater (Fi) of the site (Hi) when their mobile object (A) leaves a site (Hi), in order for this value to be the position identifier of the repeater (Fi).

24. Communications network according to one of claims 14 to 23, **characterised in that** it forms a selected mobile terminal in a group comprising at least mobile telephones, portable computers, electronic personal organisers and logical computing units which can move from one site to another.

## Patentansprüche

1. Verfahren zum Finden bzw. Lokalisieren von mobilen kommunizierenden Objekten in einem Kommunikationsnetz, bei dem - im Falle der Herstellung einer Kommunikation zwischen einem ersten (S) und einem zweiten (A) kommunizierenden Objekt, von denen wenigstens das zweite (A) mobil ist -, man an Orten (Hi), die das genannte zweite Objekt (A) passiert, Repeater (Fi) generiert, die innerhalb einer durch sie gemeinsam gebildeten Kette schrittweise kommunizieren, um jede von dem ersten Objekt (S) stammende Mitteilung zum zweiten Objekt (A) zu übertragen,
**dadurch gekennzeichnet, dass** es außerdem darin besteht:
* in jeden Repeater (Fi) einen zur Lokalisierung des nächsten Repeaters (F(i+1)) oder Orts (H(i+1)) repräsentativen Bezeichner innerhalb der genannten Kette einzuspeichern,
* jedem Repeater (Fi) im Moment seiner Generierung einen Zeitzähler (CTF) zuzuordnen, so dass er nach Ablauf einer gewählten Dauer wenigstens einem Lokalisationsserver (SL) des genannten Netzes den genannten Lokalisationsbezeichner des nächsten Repeaters (F(i+1)) oder Orts (H(i+1)) übermittelt, damit er in den genannten Server (SL) eingespeichert wird, in Korrespondenz mit einem Primärbezeichner des zweiten Objekts (A),
und **dadurch**, dass die Repeater (Fi) im Falle einer Unterbrechung der Kette fähig sind, das genannte erste Objekt (S) zu beanspruchen, um den dem genannten Primärbezeichner des zweiten Objekts (A) in dem genannten Server (SL) entsprechenden genannten Lokalisationsbezeichner des Repeaters (F(i+1)) oder Orts (H(i+1)) wieder zu erhalten.

2. Verfahren nach Anspruch 1, **dadurch gekennzeichnet, dass** man dem genannten zweiten Objekt (A) einen ersten Migrationszähler (CM1) zuordnet, man dann bei der Erzeugung jedes neuen Repeaters (Fi) an einem Ort (Hi) den Wert des ersten Zählers (CM1) um eine Einheit inkrementiert, und man den genannten Wert mit einem Schwellenwert vergleicht, so dass im Falle der Überschreitung des genannten Schwellenwerts das genannte zweite Objekt (A) dem Server (SL) seinen eigenen Lokalisationsbezeichner übermittelt, damit er eingespeichert wird, in Korrespondenz mit seinem Primärbezeichner, wobei der genannte erste Zähler (CM1) dann reinitialisiert wird.

3. Verfahren nach einem der Ansprüche 1 und 2, **dadurch gekennzeichnet, dass** man dem genannten zweiten Objekt (A) einen Zeitzähler (CTA) zuordnet, der nach dem Ablauf einer gewählten Dauer dem genannten Server (SL) seinen eigenen Lokalisationsbezeichner übermittelt, damit er in den genannten Server eingespeichert wird, in Korrespondenz mit seinem Primärbezeichner, wobei der Zeitzähler (CTA) dann reinitialisiert wird, so dass eine neue Zählung beginnt.

4. Verfahren nach einem der Ansprüche 2 und 3, **dadurch gekennzeichnet, dass** man das Zählen des genannten Zeitzählers (CTA) auslöst, nachdem man ihn installiert hat, wenn das Resultat des Vergleichs anzeigt, dass der Wert des ersten Zählers (CM1) niedriger ist als der Schwellenwert.

5. Verfahren nach einem der Ansprüche 2 bis 4, **dadurch gekennzeichnet, dass** man nach einem Vergleich bezüglich der an einem Ort verbrachten Zeit den genannten ersten Zähler (CM1) nach jeder Übertragung des Lokalisationsbezeichners des genannten zweiten Objekts (A) zum Server (SL) initialisiert.

6. Verfahren nach einem der Ansprüche 3 bis 5, **dadurch gekennzeichnet, dass** man das Zählen des Zeitzählers (CTA) des zweiten Objekts (A) stoppt, wenn es von einem Ort (Hi) zu einem anderen Ort (H(i+1)) migriert.

7. Verfahren nach einem der Ansprüche 1 bis 6, **dadurch gekennzeichnet, dass** der genannte Repeater (Fi) seine Relaisaktivität beendet, nachdem er seinen Lokalisationsbezeichner übermittelt hat.

8. Verfahren nach Anspruch 7, **dadurch gekennzeichnet, dass** man den genannten Repeater (Fi), sobald er seine Relaisaktivität beendet hat und er keiner anderen Kette angehört, beseitigt.

9. Verfahren nach einem der Ansprüche 1 bis 8, **dadurch gekennzeichnet, dass** man jedem Repeater (Fi) einen für seine Position innerhalb der genannten Kette repräsentativen Positionsbezeichner zuordnet, und **dadurch**, dass nach Ablauf der gewählten Dauer der Repeater (Fi) dem genannten Server (SL) den nächsten Lokalisationsbezeichner des nächsten Repeaters (F(i+1)) und seinen eigenen Positionsbezeichner übermittelt, so dass sie in den genannten Server (SL) eingespeichert werden, in Korrespondenz mit dem Primärbezeichner des zweiten Objekts (A).

10. Verfahren nach Anspruch 9, **dadurch gekennzeichnet, dass** man in den genannten Server (SL) den Positionsbezeichner des sendenden Repeaters (Fi) und den Lokalisationsbezeichner des nächsten Repeaters(F(i+1)) oder Orts (H(i+1)) einspeichert, in Korrespondenz mit dem Bezeichner des zweiten Objekts (A), wenn der genannte Positionsbezeichner einen höheren Wert als den eingespeicherten aufweist.

11. Verfahren nach einem der Ansprüche 2 bis 10, **dadurch gekennzeichnet, dass** man dem genannten zweiten Objekt (A) einen zweiten Migrationszähler (CM2) zuordnet, dessen Wert bei jeder Migration um eine Einheit inkrementiert wird, und einen für seine Position innerhalb der Kette repräsentativen Positionsbezeichner definiert, und **dadurch**, dass im Falle des Überschreitens des genannten gewählten Schwellenwerts durch den ersten Migrationszähler (CM1) das genannte Objekt (A) dem genannten Server (SL) seinen eigenen Lokalisationsbezeichner und den für den Wert seines zweiten Migrationszählers (CM2) repräsentativen Positionsbezeichner übermittelt, damit sie eingespeichert werden in den genannten Server (SL), in Korrespondenz mit dem genannten Primärbezeichner des zweiten Objekts (A).

12. Verfahren nach Anspruch 11, **dadurch gekennzeichnet, dass** man in den genannten Server (SL), in Korrespondenz mit dem Primärbezeichner des zweiten Objekts (A), den Positionsbezeichner des genannten zweiten Objekts (A) und seinen Lokalisationsbezeichner einspeichert, wenn der genannte Positionsbezeichner einen höheren Wert als den gespeicherten aufweist.

13. Verfahren nach einem der Ansprüche 9 und 10 in Verbindung mit einem der Ansprüche 11 und 12, **dadurch gekennzeichnet, dass** der genannte Positionsbezeichner eines Repeaters (Fi) eines Orts (Hi) in dem Moment für den Wert des zweiten Migrationszählers (CM2) des zweiten Objekts (A) repräsentativ ist, wo dieses letztere den genannten Ort (Hi) verlässt.

14. Kommunikationsnetz, kommunizierende mobile Objekte, einen Lokalisationsserver und Verarbeitungseinrichtungen (PM) umfassend, die fähig sind, im Falle der Herstellung einer Kommunikation zwischen einem ersten (S) und einem zweiten (A) kommunizierenden Objekt, von denen wenigstens das zweite (A) mobil ist, an Orten (Hi), die das genannte zweite Objekt (A) passiert, Repeater (Fi) zu generieren, die innerhalb einer durch sie gemeinsam gebildeten Kette schrittweise kommunizieren, um jede von dem ersten Objekt (S) stammende Mitteilung zum zweiten Objekt (A) zu übertragen,
**dadurch gekennzeichnet, dass** die genannten Verarbeitungseinrichtungen (PM) fähig sind, jedem Repeater (Fi) im Moment seiner Generierung einen Zeitzähler (CTF) zuzuordnen und den genannten Repeater (Fi) so zu konfigurieren, dass er einerseits einen nächsten für die Lokalisation des Repeaters (F(i+1)) oder Orts (H(i+1)) repräsentativen Bezeichner innerhalb der genannten Kette einspeichern kann und andererseits zum genannten Lokalisationsserver (SL) des genannten Netzes am Ende einer gewählten Dauer den genannten nächsten Lokalisationsbezeichner des Repeaters (F(i+1)) oder Orts (H(i+1)) überträgt, damit er in einspeichert in Korrespondenz mit einem Primärbezeichner des zweiten Objekts (A), wobei die genannten Repeater (Fi) im Falle einer Unterbrechung der genannten Kette fähig sind, das genannte erste Objekt (S) zu beanspruchen, um den dem genannten Primärbezeichner des zweiten Objekts (A) in dem genannten Server (SL) entsprechenden genannten Lokalisationsbezeichner des Repeaters (F(i+1)) oder Orts (H(i+1)) wieder zu erhalten.

15. Kommunikationsnetz nach Anspruch 14, **dadurch gekennzeichnet, dass** es einen ersten Migrationscomputer (CM1) umfasst, und **dadurch**, dass die genannten Verarbeitungseinrichtungen (PM) fähig sind, jedes Mal, wenn sie einen neuen Repeater (Fi) an einem Ort (Hi) generieren, den Wert des genannten ersten Zählers (CM1) um eine Einheit zu inkrementieren, dann den genannten Wert mit einem gewählten Schwellenwert zu vergleichen, dann, im Falle einer Überschreitung dieses Schwellenwerts, dem genannten Server (SL) den Lokalisationsbezeichner ihres mobilen Objekts (A) zur Einspeicherung in Korrespondenz mit seinem Primärbezeichner zu übermitteln und den genannten ersten Zähler (CM1) zu initialisieren.

16. Kommunikationsnetz nach einem der Ansprüche 14 und 15, **dadurch gekennzeichnet, dass** es einen Zeitzähler (CTA) umfasst, und **dadurch**, dass die genannten Verarbeitungseinrichtungen (PM) fähig sind, nach dem Ende einer gewählten Dauer dem genannten Server (SL) den Lokalisationsbezeichner ihres mobilen Objekts (A) zu übermitteln, damit er ihn in Korrespondenz mit seinem Primärbezeichner einspeichert, und dann den genannten Zeitzähler (CTA) zu initialisieren, so dass eine neue Zählung beginnt.

17. Kommunikationsnetz nach einem der Ansprüche 15 und 16, **dadurch gekennzeichnet, dass** die genannten Verarbeitungseinrichtungen (PM) fähig sind, jedes Mal, wenn das Resultat des Vergleichs anzeigt, dass der Wert des genannten ersten Migrationszählers (CM1) niedriger ist als der genannte Schwellenwert, die Zählung des genannten Zeitzählers (CTA) auszulösen, nachdem sie ihn initialisiert haben.

18. Kommunikationsnetz nach einem der Ansprüche 15 bis 17, **dadurch gekennzeichnet, dass** die genannten Verarbeitungseinrichtungen (PM) fähig sind, nach einem den Aufenthalt an einem Ort (Hi) betreffenden Vergleich, den genannten ersten Migrationszähler (CM1) nach jeder Übertragung des Lokalisationsbezeichners ihres mobilen Objekts (A) zum Server (SL) zu initialisieren.

19. Kommunikationsnetz nach einem der Ansprüche 16 bis 18, **dadurch gekennzeichnet, dass** die genannten Verarbeitungseinrichtungen (PT) fähig sind, die Zählung des genannten Zeitzählers (CTA) anzuhalten, wenn ihr mobiles Objekt (A) von einem Ort (Hi) zu einem anderen Ort (H(i+1)) migriert.

20. Kommunikationsnetz nach einem der Ansprüche 14 bis 19, **dadurch gekennzeichnet, dass** die genannten Verarbeitungseinrichtungen (PT) fähig sind, jeden Repeater (Fi) im Moment seiner Generierung so zu konfigurieren, dass er seine Aktivität beendet, nachdem er dem genannten Server (SL) seinen Lokalisationsbezeichner übermittelt hat.

21. Kommunikationsnetz nach einem der Ansprüche 14 bis 20, **dadurch gekennzeichnet, dass** die genannten Verarbeitungseinrichtungen (PT) fähig sind, jedem Repeater (Fi) im Moment seiner Generierung einen für seine Position innerhalb der genannten Kette repräsentativen Positionsbezeichner zuzuordnen, so dass der genannte Repeater (Fi) nach dem Ende der gewählten Dauer dem genannten Server (SL) den genannten Lokalisationsbezeichner des nächsten Repeaters (F(i+1)) oder Orts (H(i+1)) und seinen eigenen Positionbezeichner übermittelt, damit sie in den genannten Server (SL) eingespeichert werden in Korrespondenz mit dem Primärbezeichner des mobilen Objekts (A).

22. Kommunikationsnetz nach einem der Ansprüche 15 bis 21, **dadurch gekennzeichnet, dass** es einen zweiten Migrationszähler (CM2) umfasst, dessen Wert einen für die Position des genannten mobilen Objekts (A) innerhalb der genannten Kette repräsentativen Positionsbezeichner definiert, und **dadurch**, dass die Verarbeitungseinrichtungen (PM) fähig sind, den Wert des genannten zweiten Migrationszählers (CM2) bei jeder Migration des genannten Objekts (A) um eine Einheit zu inkrementieren, und dem genannten Server (SL) im Falle einer Überschreitung des genannten gewählten Schwellenwerts durch den ersten Migrationszähler (CM1) die Lokalisations- und Positionsbezeichner ihres mobilen Objekts (A) zu übermitteln, damit er sie einspeichert in Korrespondenz mit dem Primärbezeichner des mobilen Objekts (A).

23. Kommunikationsnetz gemäß der Kombination der Ansprüche 21 und 22, **dadurch gekennzeichnet, dass** die Verarbeitungseinrichtungen (PM) fähig sind, wenn ihr mobiles Objekts (A) einen Ort (Hi) verlässt, dem Repeater (Fi) des Orts (Hi) den Wert des zweiten Migrationszählers (CM2) mitzuteilen, damit er den genannten Positionsbezeichner des genannten Repeaters (Fi) bildet.

24. Kommunikationsnetz nach einem der Ansprüche 14 bis 23, **dadurch gekennzeichnet, dass** es ein mobiles Terminal konstituiert, ausgewählt aus einer Gruppe, die wenigstens die Mobiltelefone, die Notebooks, die PDAs und die logischen Recheneinheiten umfasst, die sich von Ort zu Ort bewegen können.
